(19) **Europäisches Patentamt / European Patent Office / Office européen des brevets**

(11) **EP 4 694 110 A1**

(12) **EUROPEAN PATENT APPLICATION**
published in accordance with Art. 153(4) EPC

(43) Date of publication:
**11.02.2026 Bulletin 2026/07**

(21) Application number: **24778769.0**

(22) Date of filing: **14.02.2024**

(51) International Patent Classification (IPC):
*H04N 13/122* (2018.01)     *G06F 3/01* (2006.01)
*G09G 5/06* (2006.01)       *G09G 5/10* (2006.01)
*H04N 13/15* (2018.01)      *H04N 13/38* (2018.01)
*H04N 13/376* (2018.01)

(52) Cooperative Patent Classification (CPC):
**G09G 5/02; G06T 7/90; G09G 3/2003; H04N 9/67;**
**H04N 13/122; H04N 13/15;** G09G 2320/0242;
G09G 2320/0271; G09G 2320/0276;
G09G 2320/028; G09G 2320/0285;
G09G 2320/0666; G09G 2320/068; G09G 2354/00

(86) International application number:
**PCT/JP2024/004922**

(87) International publication number:
**WO 2024/202624 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.03.2023 JP 2023055160**

(71) Applicant: **Sony Group Corporation**
**Tokyo 108-0075 (JP)**

(72) Inventors:
• **KOIKE, Tatsuya**
  **Tokyo 108-0075 (JP)**
• **AKAO, Masato**
  **Tokyo 108-0075 (JP)**
• **HORIKAWA, Masamoto**
  **Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **IMAGE PROCESSING METHOD, IMAGE PROCESSING DEVICE, AND RECORDING MEDIUM**

(57)     An image processing method according to an embodiment of the present technology includes controlling a graphics processing apparatus to acquire a corrective luminance texture including a luminance value associated with a visually recognizing angle of a user with respect to at least one display panel, generating a color transformation matrix based on the visually recognizing angle and the corrective luminance texture acquired, and correcting luminance and chromaticity of a rendering image based on the color transformation matrix generated. This enables an efficient image correction.

EP 4 694 110 A1

**FIG.2**

## EP 4 694 110 A1

**Description**

Technical Field

The present technology relates to an image processing method, an image processing apparatus, and a recording medium applicable to an image correction.

Background Art

Patent Literature 1 discloses a reproduction apparatus that performs an image correction. This reproduction apparatus detects a visually recognizing angle of a viewer and performs a color correction, a luminance correction, and a motion correction of an image depending on the detected visually recognizing angle. As a result, the image is corrected so that an image quality is optimized depending on the visually recognizing angle of the viewer, enabling a high-quality image to be displayed.

Patent Literature 2 discloses a liquid crystal display apparatus that performs the image correction. In this liquid crystal display apparatus, correction of a chromaticity point of an image is performed based on a user's viewing angle and color change amount information. The color change amount information is a correspondence between the viewing angle and the corresponding color change amount in displayed light by a color difference. This makes it possible to suppress a color change caused by a change in the viewing angle.

Citation List

Patent Literature

Patent Literature 1: Japanese Patent Application Laid-open No. 2006-276692
Patent Literature 2: Japanese Patent Application Laid-open No. 2010-169868

Disclosure of Invention

Technical Problem

Thus, there is a need for technology that efficiently enables an image correction.

In view of the circumstances as described above, an object of the present technology is to provide an image processing method, an image processing apparatus, and a recording medium that efficiently enables an image correction.

Solution to Problem

In order to achieve the above-mentioned object, an image processing method according to an embodiment of the present technology includes controlling a graphics processing apparatus to acquire a corrective luminance texture including a luminance value associated with a visually recognizing angle of a user with respect to at least one display panel. A color transformation matrix is generated based on the visually recognizing angle and the corrective luminance texture acquired. Luminance and chromaticity of a rendering image are corrected based on the color transformation matrix generated.

An image processing apparatus according to an embodiment of the present technology includes a storage section and a graphics processing apparatus. The storage section stores the corrective luminance texture including a luminance value associated with the visually recognizing angle of the user with respect to at least one display section. The graphics processing apparatus is configured to generate the color transformation matrix based on the visually recognizing angle and the corrective luminance texture stored by the storage section, and to correct the luminance and the chromaticity of the rendering image based on the color transformation matrix.

A recording medium into which a program according to an embodiment of the present technology is written causes a computer system to execute a predetermined instruction. The predetermined instruction is to acquire the corrective luminance texture including the luminance values associated with the visually recognizing angle of the user with respect to the at least one display panel, to generate the color transformation matrix based on the visually recognizing angle and the corrective luminance texture acquired, and to correct the luminance and the chromaticity of the rendering image based on the color transformation matrix generated.

Brief Description of Drawings

[Fig. 1] Schematic diagrams each showing a configuration example of a display system according to an embodiment of the present technology.
[Fig. 2] A block diagram showing a functional configuration example of the display system.
[Fig. 3] A flowchart showing a processing example of a texture generation.
[Fig. 4] Schematic diagrams each showing contents of the texture generation.
[Fig. 5] A schematic diagram showing a definition example of an angle of a back panel.
[Fig. 6] A diagram showing an example of a group of colorimetric luminance values in a table form.
[Fig. 7] Plots of the luminance values.
[Fig. 8] Schematic diagrams each showing an example of the texture.
[Fig. 9] A flowchart showing a processing example of an image correction.
[Fig. 10] A flowchart showing a processing example of determination of a luminance reference.
[Fig. 11] Schematic diagrams each showing a definition example of a range of an visually recognizing angle.
[Fig. 12] A flowchart showing a processing example of generation of a color transformation matrix.
[Fig. 13] Schematic diagrams each showing a display system of a comparative example.
[Fig. 14] A schematic diagram showing a state of pixel vignetting.
[Fig. 15] Schematic diagrams showing an example of light distribution characteristics of the display panel.
[Fig. 16] A block diagram showing a hardware configuration example of a computer that can realize an image processing apparatus.

Mode(s) for Carrying Out the Invention

Embodiments according to the present technology will be described below with reference to the drawings.

[Display system]

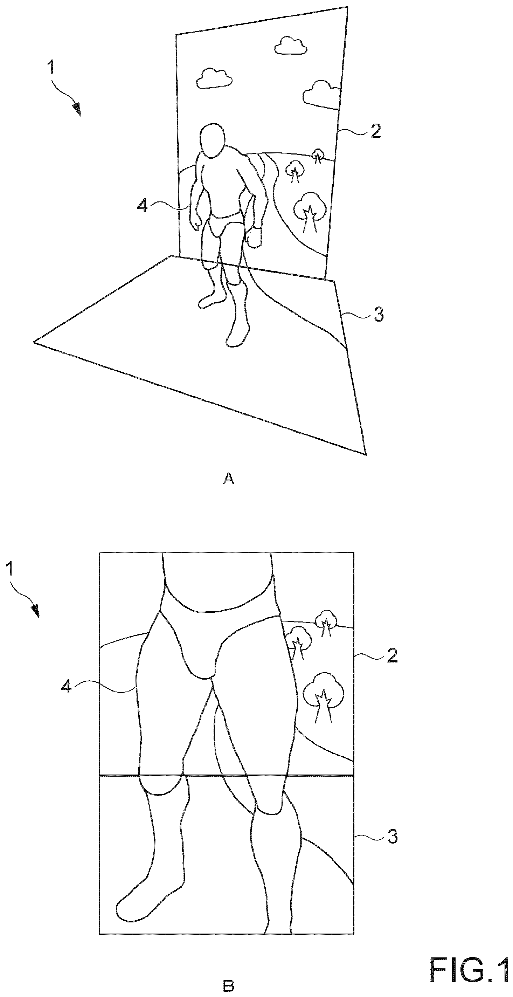

Fig. 1 is schematic diagrams each showing a configuration example of a display system 1 according to an embodiment of the present technology. Fig. 1A shows a diagram showing the display system 1 viewed obliquely. Fig. 1B shows a diagram showing the display system 1 viewed from the front. The display system 1 has a back panel 2 and a floor panel 3.

The back panel 2 is a display panel, for example, liquid crystal, electro-luminescence (EL), or the like. The back panel 2 has a rectangular shape and is placed vertically to a wall, for example. Not limited to this, the back panel 2 may be placed at slightly oblique to the vertical direction. Other specific placement and shapes of the back panel 2 are not limited.

In this example, a scenery image including trees, clouds, and a road is displayed on the back panel 2. Specific contents of the image displayed on the back panel 2 are not limited, and objects such as stairs, for example, may be displayed. Alternatively, a moving image may be displayed by the back panel 2.

The floor panel 3 is likewise the display panel such as the LCD, the EL, etc. The floor panel 3 has a rectangular shape and is placed on a floor of a space where the display system 1 exists, for example. In this example, a bottom edge of the back panel 2 and a back edge of the floor panel 3 are abut, and both panels are placed so that they form an angle of approximately 90°. Furthermore, the back panel 2 and the floor panel 3 are displayed in such a way that the images of the road are connected. Not limited to this, the floor panel 3 may display an image representing a color, a pattern, etc. of the floor.

The image displayed by the display system 1 is visually recognized by a user. For example, the user stands at the front side of the display system 1 and visually recognizes the image displayed on the back panel 2 and the floor panel 3. The user may also visually recognize the image from an oblique side or from the side.

It may be possible to simultaneously view the image and listen audio by having the audio output in conjunction with the display of the image. Although viewing of the image by the user may be described below as "viewing and listening," the present technology is of course applicable to the case where no sound is output and only the visually recognizing of the image is performed.

In this embodiment, the image that can be viewed stereoscopically (hereinafter referred to as a stereoscopic image) is displayed by the back panel 2 and the floor panel 3. In this example, an image 4 of a human (hereinafter referred to as a human image 4) is displayed as the stereoscopic image. The user can, for example, view the back panel 2 and the floor panel 3 wearing special glasses to view stereoscopically the human image 4.

As shown in Figa. 1A and B, the human image 4 appears to the user as if it were in front of the back panel 2.

The display of the stereoscopic image allows the user to view the image under a highly immersive feeling. In addition, any image that can be viewed stereoscopically may be displayed, not limited to the human image 4. For example, objects such as a ball or an apple may be displayed. Alternatively, a naked-eye stereoscopic display may be used as the back panel 2 and the floor panel 3, enabling the user to view stereoscopically without wearing special equipment.

The number of display panels included in the display system 1 is not limited. For example, the display system 1 may be configured of three or more display panels. In this case, all of the display panels may display the stereoscopic images, or only some of the display panels may display the stereoscopic images. The placement of the display panels is also not limited, for example, the display panels may be placed on a ceiling. The back panel 2 and the floor panel 3 correspond to an embodiment of the display panel according to an embodiment of the present technology.

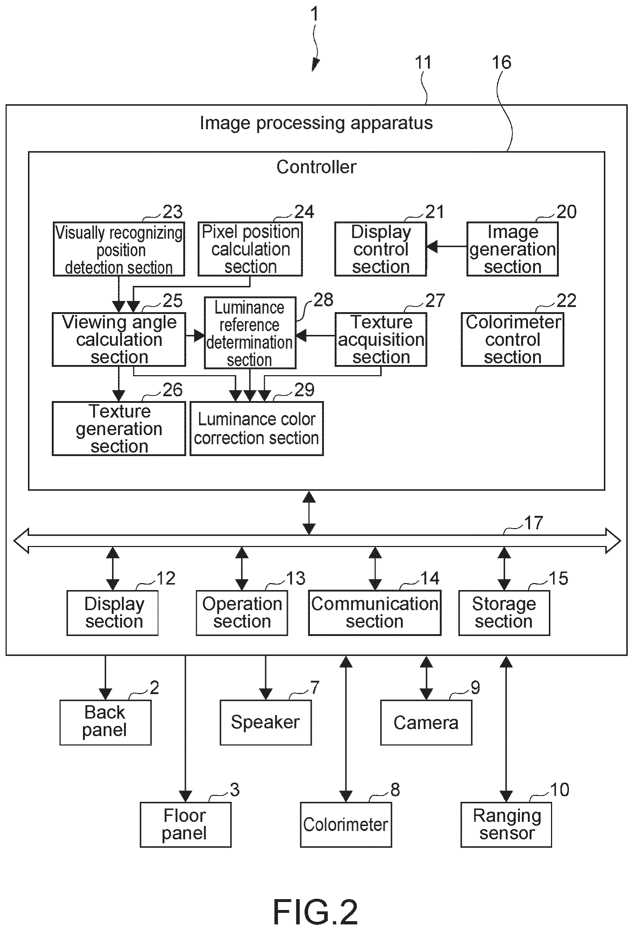

Fig. 2 is a block diagram showing a functional configuration example of the display system 1. The display system 1 further has a speaker 7, a colorimeter 8, a camera 9, a ranging sensor 10, and an image processing apparatus 11.

The speaker 7 can output various types of sound. For example, sound such as a background music and a sound effect is output by the speaker 7 in conjunction with the display of image on the back panel 2 and the floor panel 3. This allows the user to view the image under the highly immersive feeling. A specific configuration of the speaker 7 is not limited.

The colorimeter 8 is an apparatus that performs colorimetry of the image displayed by the back panel 2 and the floor panel 3. For example, a luminance meter is used as the colorimeter 8 to perform the colorimetry. The specific details of the colorimetry by the colorimeter 8 are described below.

The camera 9 images the user and the colorimeter 8. In this embodiment, a stereo camera is used, for example, as the camera 9 to acquire the image and depth information of the user and the colorimeter 8. When the user is imaged, the colorimeter 8 may be used instead of the camera 9.

The ranging sensor 10 acquires the depth information of the user and the colorimeter 8. For example, a ToF (Time of Flight) sensor or LiDAR (Light Detection and Ranging, Laser Imaging Detection and Ranging) sensor is used as the ranging sensor 10.

In this embodiment, the positions of the user and the colorimeter 8 are calculated based on the image and the depth information acquired by the camera 9 and the ranging sensor 10. The depth information and the like may be acquired by only one of the camera 9 and the ranging sensor 10. Specific details regarding the calculation of the position are described below.

The image processing apparatus 11 is realized by any computer, for example, a PC (Personal Computer). Alternatively, the image processing apparatus 11 may be built into the back panel 2 and the floor panel 3, and they may be configured integrally. The image processing apparatus 11 has a display section 12, an operation section 13, a communication section 14, a storage section 15, and a controller 16. These blocks are interconnected via a bus 17. Instead of the bus 17, each block may be connected using a communication network or a non-standardized proprietary communication method.

The display section 12 is a display device using, for example, the liquid crystal, the EL, etc., and displays various images showing a status of the image processing apparatus 11 and a GUI (Graphical User Interface) for settings, for example.

The operation section 13 is, for example, a keyboard, a pointing device, a touch panel, or other operating apparatus. When the operation section 13 includes the touch panel, the touch panel can be integrated with the display section 12.

The communication section 14 is a communication module for communicating with other devices via a network such as a Local Area Network (LAN) or Wide Area Network (WAN), etc. A wireless LAN module such as WiFi or a short-range wireless communication module such as Bluetooth (registered trademark) may be provided. Communication equipment such as a modem and a router may also be used.

The storage section 15 is a storage device such as a non-volatile memory and an HDD (Hard Disk Drive, an SSD (Solid State Drive), or the like is used, for example. Any other non-transitory storage medium that can be read by a computer may be used. A control program for controlling an overall operation of the image processing apparatus 1 is stored in the storage section 15. A method of installing the control program into the image processing apparatus 1 is not limited. For example, installation may be performed via various storage media, or the program may be installed via the Internet or the like.

The controller 16 has a GPU (Graphics Processing Unit, a graphics processing apparatus). In this embodiment, for example, the GPU loads a program according to the present technology, which is prerecorded in a ROM or the like, into a RAM and executes it, thereby executing the image processing method according to the present technology. The controller 16 also has other hardware necessary for a computer configuration, for example, a processor such as a CPU and a DSP, the memory such as the ROM and the RAM, and the storage device such as the HDD. As the controller 16, a PLD (Programmable Logic Device) such as an FPGA (Field Programmable Gate Array), other devices such as an ASIC (Application Specific Integrated Circuit), etc. may be used, for example.

In this embodiment, when the CPU of the controller 16 executes a program (for example, application program) according to the present technology, as functional blocks, an image generation section 20, a display control section 21, a colorimeter control section 22, a visually recognizing position detection section 23, a pixel position calculation section 24, a viewing angle calculation section 25, a texture generation section 26, a texture acquisition section 27, a luminance reference determination section 28, and a luminance color correction section 29 are realized. In order to realize each functional block, dedicated hardware such as an IC (integrated circuit) may be used as appropriate.

The image generation section 20 generates an image to be displayed by the back panel 2. In this embodiment, the image generation section 20 generates a landscape image, a road image, and the human image 4. The image generation section 20 also generates an image whose entire surface is red, green, blue, or white, which is used for the colorimetry as described below. A specific method of generating the image is not limited. For example, the image generation section 20 reads out the image stored in the storage section 15 in advance to generate the image. The specific content of the generated image is not limited.

Similarly, the image displayed by the floor panel 3 is also generated by the image generation section 20. Hereinafter, the same processing executed on the floor panel 3 as those executed on the back panel 2 is also executed on the floor panel 3, but the explanation regarding the floor panel 3 may be omitted.

In this embodiment, the image generated by the image generation section 20 is corrected by the luminance color correction section 29, and a corrected image is displayed on the back panel 2. The image immediately after being generated by the image generation section 20 (uncorrected image) corresponds to an embodiment of a rendering image according to the present technology.

The display control section 21 controls the display of the image by the back panel 2. Specifically, the display control section 21 acquires the image from the image generation section 20 and controls the display so that the image is displayed on the back panel 2 at a predetermined timing. The display control section 21 can also display a stereoscopic image on the back panel 2. When the stereoscopic image is displayed, the display may be controlled by time division.

The colorimeter control section 22 controls imaging of the image by the colorimeter 8. The colorimeter control section 22 can also control a position and an imaging direction of the colorimeter 8. For example, a mechanism is provided to change the position and an orientation of the colorimeter 8 and an operation of the mechanism is controlled by the colorimeter control section 22, thereby indirectly controlling the position and the imaging direction of the colorimeter 8. As a result, the image displayed on the back panel 2 can be imaged from various angles. Any other operation of the colorimeter 8 may be controlled.

A visually recognizing position detection section 23 acquires a visually recognizing position of the user visually recognizing the display panel. Specifically, an eye position of the user is acquired as the visually recognizing position by the visually recognizing position detection section 23. For example, a three-dimensional coordinate system (X, Y, Z) is defined in advance in a space where the display system 1 exists, and a three-dimensional coordinate of the eye of the user in the coordinate system is acquired. A position that serves as a reference for the three-dimensional coordinate and an orientation of the coordinate system are not limited. Other coordinate systems, such as a polar coordinate system, may also be used.

In this example, the image and the depth information of the user are acquired by the camera 9 and the ranging sensor 10, and the coordinate of the eye of the user is calculated by the visually recognizing position detection section 23 based on the acquired image and depth information. Similarly, the visually recognizing position detection section 23 can also acquire the coordinate of the colorimeter 8. A method of acquiring the visually recognizing position by the visually recognizing position detection section 23 is not limited. Other information, such as a direction of a line of sight, may also be acquired.

The pixel position calculation section 24 calculates the position of the pixel in the back panel 2. Specifically, the pixel position calculation section 24 calculates the three-dimensional coordinate of a predetermined pixel on the back panel 2. The three-dimensional coordinate is calculated as a coordinate in the same coordinate system as that defined when the three-dimensional coordinate of the eye of the user is calculated by the visually recognizing position detection section 23.

For example, a coordinate of 100 row and 200 column of pixels on the back panel 2 is (10, 20, 30), and the corresponding information is stored in the storage section 15 in advance. The position of the pixel is calculated by reading the information from the storage section 15. Of course, these values are only an example, and the specific values are not limited.

The viewing angle calculation section 25 calculates the visually recognizing angle of the user based on the visually recognizing position acquired by the visually recognizing position detection section 23. Specifically, the visually recognizing angle of the user with respect to the predetermined pixel of the back panel 2 is calculated. First, the viewing angle calculation section 25 acquires the coordinate of the eye of the user calculated by the visually recognizing position detection section 23 and the coordinate of the predetermined pixel calculated by the pixel position calculation section 24. Furthermore, the visually recognizing angle of the user with respect to the predetermined pixel is calculated based on the two coordinates acquired. The visually recognizing angle can be calculated, for example, by calculation of a difference between two coordinates or by calculation using a trigonometric ratio. Of course, a specific method of calculating the visually recognizing angle is not limited.

The viewing angle calculation section 25 can also calculate an angle of the colorimeter 8 (colorimetric angle) with respect to the back panel 2 when the colorimeter 8 performs the colorimetry of the back panel 2. The calculation of the colorimetric angle is executed in the same manner as the calculation of the visually recognizing angle of the user. Since an operation of the colorimetric angle 8 is controlled by the colorimeter control section 22, there may be cases where the coordinate and the colorimetric angle of the colorimeter 8 are known and the processing such as acquisition of the image and the depth information, calculation of the coordinate and calculation of the colorimetric angle of the colorimeter 8 are unnecessary. In such cases, the known colorimetric angle may be used as it is.

The texture generation section 26 generates a texture related to the correction of the image displayed by the back panel 2. Specific contents of a texture generation are described below.

The texture acquisition section 27 acquires the texture. For example, the texture generated by the texture generation section 26 is stored in the storage section 15, and is acquired from the storage section 15 by the texture acquisition section 27.

The luminance reference determination section 28 determines a luminance reference that serves as a reference for correcting the luminance value of the rendering image (uncorrected image). The luminance color correction section 29 corrects the rendering image and generates the corrected image. Specific contents of determining the luminance reference and generating the corrected image are described below.

[Texture Generation]

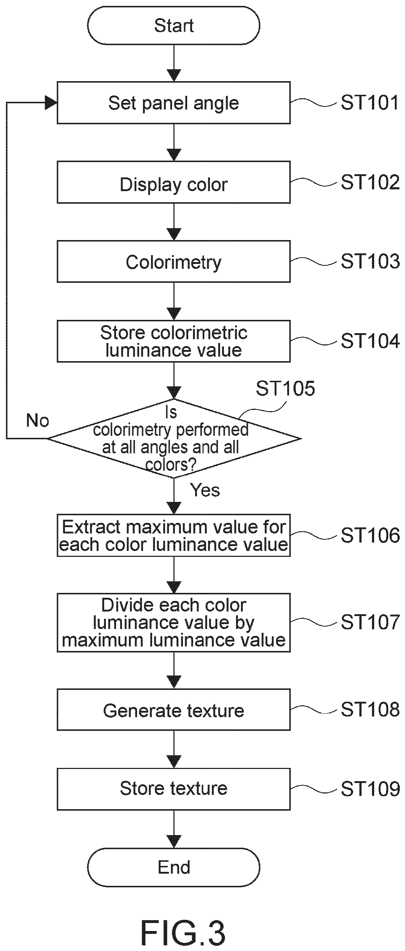

Fig. 3 is a flowchart showing a processing example of the texture generation. In this embodiment, when the display system 1 is used by the user, the corrected image corrected by the luminance color correction section 29 is displayed on the back panel 2. Then, as previous processing (pre-processing) before the display system 1 is used, the processing is performed to pre-generate a texture to be used in generating the corrected image. Fig. 3 is a flowchart for this pre-processing.

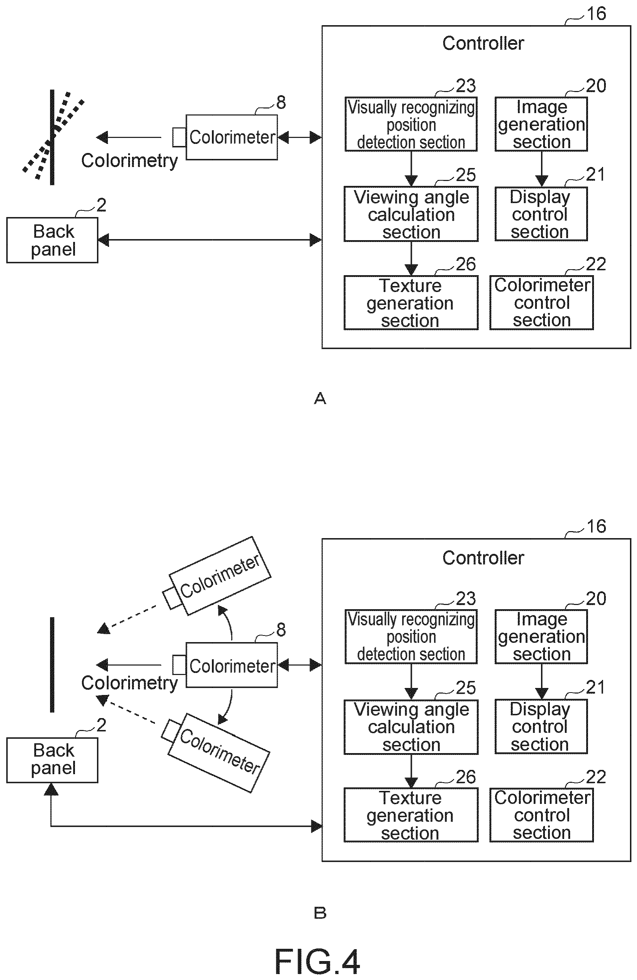

A tilt of the back panel 2 is set to a predetermined angle (Step 101). Fig. 4 is schematic diagrams showing contents of the texture generation. As shown in Fig. 4A, an angle of the back panel 2 is set so that a colorimetric angle of the back panel 2 with respect to the colorimeter 8 is at a predetermined angle. For example, the angle may be set by tilting the back panel 2 manually, or a mechanism may be provided in advance to adjust the tilt of the back panel 2. If necessary, the coordinate of the colorimeter 8 is acquired by the visually recognizing position detection section 23 and the colorimetric angle is calculated by the viewing angle calculation section 25.

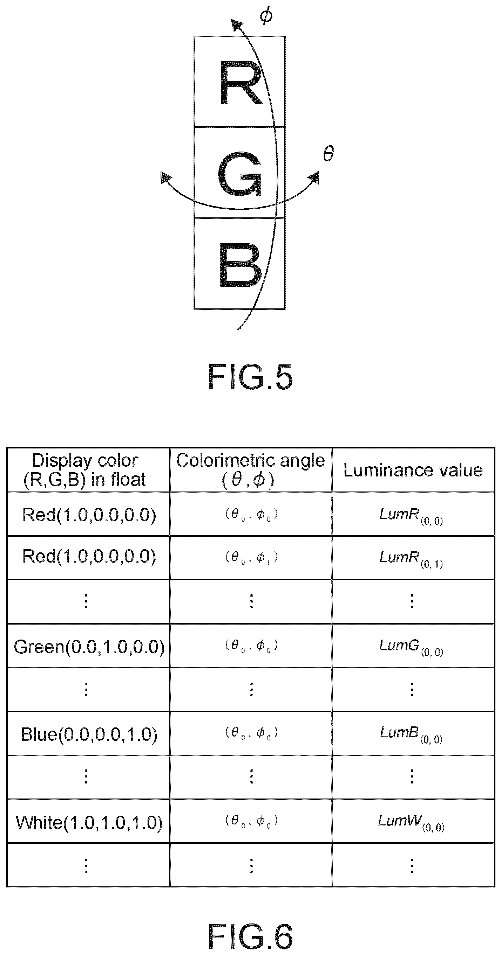

Fig. 5 is a schematic diagram showing a definition example of the angle of the back panel 2. The back panel 2 has an element array of a red LED (Light Emitting Diode) (R), a green LED (G), and a blue LED (B) in this order within a single pixel. As shown in Fig. 5, in this example, the tilt of the back panel 2 is defined as the tilt in a $\theta$ direction when the back panel 2 is tilted toward a direction in which the RGB are aligned (up and down direction in Fig. 5). When the colorimeter 8 shoots the back panel 2 from the front (from front side in Fig. 5), the case where R is tilted toward the back and B is tilted toward the front is defined as a positive tilt in a $\varphi$ direction. Fig. 4A shows a schematic diagram showing the back panel 2 tilted in only one direction, but in reality, the back panel 2 is tilted in both directions in the $\theta$ and $\varphi$ directions.

For example, $\theta$ ranges from 0° to 80°, and $\varphi$ ranges from - 80° to 80°, with angles set every 10°. In this case, 9 different angles are set in the $\theta$ direction: 0°, 10°, 20°, ..., 80°. Similarly, in the $\varphi$ direction, 17 different angles are set: -80°, -70°, ..., 80°. That is, 153 different angles are set in the two directions combined.

In this example, symmetry in the $\theta$ direction is assumed and the angle is set in the range of 0° to 80° instead of the range of - 80° to 80°. This reduces the number of colorimetric measurements and enables efficient colorimetry. Of course, the angles may be set for all possible angles without assuming the symmetry. In addition, an angle range and a grid (width of angle setting) of $\theta$ and $\varphi$ are not limited. A method of defining the tilt of the back panel 2 is also not limited to the described above. For example, $\theta$ and $\varphi$ are defined after specifications of the back panel 2, such as an LED element array, are taken into consideration.

As shown in Fig. 4B, the angle may be set by changing the imaging direction of the colorimeter 8 while the back panel 2 is fixed. In this case, the position and the orientation of the colorimeter 8 is controlled by the colorimeter control section 22. Alternatively, the angles of both the back panel 2 and the colorimeter 8 may be changed. The following is an processing example when the angle is set to ($\theta = 0°$, $\varphi = -80°$) in Step 101.

A color image is displayed on the back panel 2 (Step 102). In this embodiment, a red image, a green image, a blue image, and a white image are displayed on an entire surface of the back panel 2. Specifically, the images are displayed with R, G, B, and W emitted at the maximum, that is, when the panel is an 8-bit display panel, the image is displayed at "255," the maximum 8-bit value. For example, for red, the image is displayed with (R, G, B) = (255, 0, 0). In this example, it is assumed that there are no differences in light distribution characteristics within the back panel 2 and that there are no differences due to color irregularities, etc. (uniformity is sufficiently good). The following describes the processing when the red image is displayed. In this case, the image generation section 20 generates the red image and the display control section 21 controls the display of the red image on the back panel 2.

The red image, the green image, the blue image, and the white image correspond to an embodiment of an image for colorimetry (target image for colorimetry) according to the present technology. Other color images, such as a brown image, may also be displayed as the image for colorimetry. Any other colorimetric image may be displayed to the extent that the present technology is feasible.

The colorimetry of the image is performed (Step 103). In this embodiment, the colorimeter 8 is used to perform the colorimetry of the red image displayed on the back panel 2. By processing up to Step 102, the back panel 2 is tilted ($\theta = 0°$, $\varphi$ = -80°), and the red image is displayed on the entire surface. In this state, the colorimeter control section 22 controls the imaging by the colorimeter 8, and the colorimetry of the red image is performed.

In this embodiment, the texture generation section 26 generates a colorimetric luminance value, which is the luminance value of the image for colorimetry at each colorimetric angle to the back panel 2. Specifically, when the colorimetry is performed by the colorimeter 8, the texture generation section 26 acquires the luminance value from the colorimeter 8. In addition, the colorimetric angle "$\theta = 0°$, $\varphi = -80°$" is obtained from the viewing angle calculation section 25. Furthermore, information that the image for colorimetry is the "red image" is acquired from the image generation section 20.

The texture generation section 26 generates the information associated with the three acquired pieces of information (colorimetric angle, image for colorimetry, and luminance value) as the colorimetric luminance value. That is, in this example, the information associated with the colorimetric angle "$\theta=0°$, $\varphi=-80°$," the image for colorimetry "red image" and the luminance value is generated as the colorimetric luminance value.

The colorimetric luminance value obtained by the colorimetry is stored (Step 104). In this example, the colorimetric luminance value is stored in the storage section 15.

It is determined whether the colorimetry is performed at all colorimetric angles and all colors (Step 105). If the colorimetry is not performed at any one of the colorimetric angles ($\theta$, $\varphi$) and the colors (red, green, blue, white) (No in Step 105), the angle setting of the back panel 2 is performed again in Step 101.

For example,

($\theta = 0°$, $\varphi = -80°$), green
($\theta = 0°$, $\varphi = -80°$), blue
($\theta = 0°$, $\varphi = -80°$), white
($\theta = 0°$, $\varphi = -70°$), red
...
($\theta = 0°$, $\varphi = 80°$), white
($\theta = 10°$, $\varphi = -80°$), red
...
($\theta = 80°$, $\varphi = 80°$), white.

In this way, the colorimetric angles and colorimetric images are set in the order of a lexicographical order, and the colorimetry is performed. Of course, this order is just an example, and the colorimetry may be performed in any order. For example, the colorimetry is performed in the order: after all colorimetric angles are set for red, all colorimetric angles are set for blue, and so on.

The colorimetric luminance value obtained from each colorimetry is stored each time in the storage section 15 in Step 104. A group of the colorimetric luminance values is stored in the storage section 15 in a table format, for example. Fig. 6 is a diagram showing an example of the group of the colorimetric luminance values in the table format.

As shown in Fig. 6, the group of colorimetric luminance values in the table format is stored in the storage section 15, where each image for colorimetry (display color) is arranged in the left column, the colorimetric angles are arranged in the center column, and the luminance values are arranged in the right column. Each image for colorimetry is, for example, information in which the display color is represented by the three values (R, G, B). For example, the red image is stored as three-values information such as (1.0, 0.0, 0.0). The colorimetric angle is stored as two-values information, for example, ($\theta_{(0)} = 0°$, $\varphi_{(0)} = -80°$). The luminance value is stored as information such as "$LumR_{(0,0)} = 500$", for example. There is no limitation on what unit is used for the luminance value.

In this way, the group of colorimetric luminance values is stored in the table form, with each row corresponding to one colorimetric luminance value. In this example, there are 4 colors for the image for colorimetry, 9 colorimetric angles ($\theta$), and 17 colorimetric angles ($\varphi$), so 612 colorimetric luminance values are stored by multiplying these values. That is, the table includes 612 rows.

A format of the information stored in the table is not limited. The format of the information stored is also not limited to the table format, and any format of information including the colorimetric luminance values may be stored.

The colorimetric luminance values may also be complemented by interpolation. For example, when two colorimetric luminance values:

"$\theta=0°$, $\varphi=-80°$", "red", "luminance value 500"

"θ=0°, φ=-70°", "red", "luminance value 700"

are obtained, interpolation yields new colorimetric luminance value: "θ=0°, φ=-75°", "red", "luminance value 600". This generates the colorimetric luminance values at intervals of 5°, making it possible to obtain a large number of colorimetric luminance values with a small number of colorimetry. In the above, the method of taking an average of the two values is used, but interpolation may be performed using any other interpolation method.

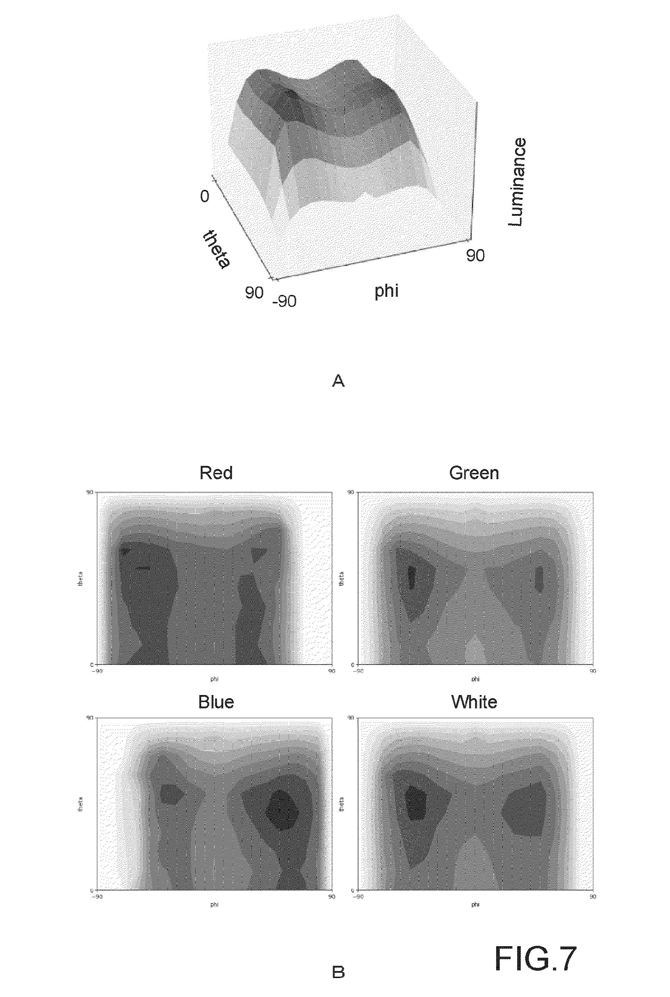

Fig. 7 shows plots of the luminance values. Fig. 7A shows a three-dimensional diagram showing the luminance values. The θ axis is taken in the depth direction, the φ axis in the right and left direction, and the luminance values at the colorimetric angle (θ, φ) are taken in the vertical direction in Fig. 7A. In this example, the luminance values are generally distributed in a doble hamp pattern, with higher luminance values on the positive and negative sides of φ (right and left sides of Fig. 7A) and lower luminance values near φ = 0°.

Fig. 7B shows two-dimensional contour notation image diagrams showing the luminance values. The upper left diagram shows a distribution of the luminance value (red luminance value) in the red image has θ on the vertical axis and φ on the horizontal axis. The luminance value at the colorimetric angle (θ, φ) is shown in shades of gray so that the higher the luminance value, the closer to black, and the lower the luminance value, the closer to white. In this example, the red luminance value is generally distributed such that the red luminance value is higher on the positive side and a part of the negative side of φ, and the luminance value is lower around φ = 0°. Similarly, a distribution of a green luminance value is shown in the upper right, a distribution of a blue luminance value is shown in the lower left, and a white luminance value is shown in the lower right of Fig. 7B.

The distribution of each luminance value shown in Fig. 7 is only an example and can take various distributions depending on the light distribution characteristics of the display panel and the like. An application of the present technology is not limited to the distribution of each luminance value as shown in Fig. 7.

When the colorimetry is completed for all colorimetric angles and colors (Step 105, Yes), the maximum luminance value for each color is extracted (Step 106). Specifically, the texture generation section 26 first extracts the highest luminance value from the 153 luminance values (9 types of θ and 17 types of φ) in the red image as the maximum luminance value. Similarly, the maximum luminance values for the green luminance, the blue luminance, and the white luminance are also extracted.

A calculation is executed to divide each luminance value by the maximum luminance value (Step 107). For example, when the luminance value in the "red image" "θ$_{(0)}$ = 0°,φ$_{(0)}$ = -90°" is "LumR$_{(0, 0)}$ = 500" and the maximum luminance value of red calculated in Step 106 is 1000, the texture generation section 26 performs the calculation to divide the luminance value by the maximum luminance value, generating a normalized luminance value "0.5". The normalized luminance value is a value between 0 and 1. The luminance value and the maximum luminance value are examples only, and can take various values in reality.

Similarly, the calculation is executed for other colorimetric angles of the red image and for the luminance values of the other color images to generate normalized luminance values for each color and each colorimetric angle. Hereinafter, the normalized luminance value may be simply referred to as the luminance value with interchangeably.

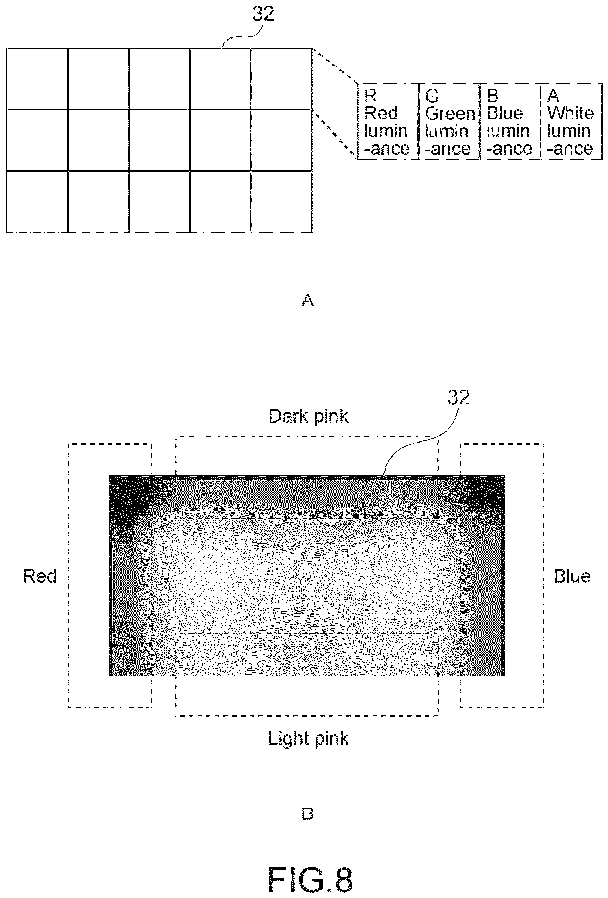

The texture is generated (Step 108). In this embodiment, a texture 32 including the respective colorimetric luminance values is generated by the texture generation section 26. Fig. 8 is a schematic diagram showing an example of the texture 32.

A texture is a set of pixels arranged in the two dimension, that is, an image. A typical texture is configured of up to four channels, and includes, for example, R (red), G (green), B (blue), and A (opacity) channels. In this embodiment, red luminance is held in an R channel, as shown in Fig. 8A. Similarly, green luminance is held in a G channel and blue luminance is held in a B channel. In addition, white luminance is held in an A (opacity) channel.

The luminance value is held in each pixel of the texture 32 so that the colorimetric angle θ corresponds to the vertical direction of the texture 32 and φ corresponds to the horizontal direction of texture 32. For example, the luminance value for "θ = 0°, φ = -80°" is held in the bottom-leftmost pixel of the texture 32. The luminance value of "θ = 40°, φ = 0°" is held in the center pixel of the texture 32. In this way, the texture 32 is an image that contains the overall information of the colorimetric luminance values in the back panel 2 in a manner that the colorimetric angle corresponds to the pixel position, the color of the image for colorimetry corresponds to the channel type, and the luminance value is held for each channel of each pixel.

Fig. 8B shows an example of an actual image of the texture 32. Although the texture 32 is shown in grayscale in this diagram, the texture 32 is actually a colored image. Specifically, the upper edge of the texture 32 is dark pink, the left edge is red, the lower edge is light pink, and the right edge is blue.

Thus, the color of each pixel in the texture 32 depends on the luminance value held in each channel of the pixel. For example, when the red luminance value held in the channel of certain pixel is relatively high and the green luminance and blue luminance are relatively low, the pixel will be a pixel with a color close to red. The opacity of certain pixel depends on the value of the white luminance held in the A channel of the pixel.

In this example, since symmetry is assumed in the θ direction, the texture 32 is short in the vertical direction (θ axis) and long in the horizontal direction ($\varphi$ axis), but if no symmetry is assumed, the texture 32 could be a square image, etc. The texture 32 shown in Fig. 8B is only an example, and can take various color distributions depending on the luminance values. The texture 32 corresponds to an embodiment of the corrective luminance texture according to an embodiment of the present technology.

The generated texture 32 is stored (Step 109). Specifically, the GPU in the controller 16 is controlled and the texture 32 is stored in the storage section 15.


[Image Correction]

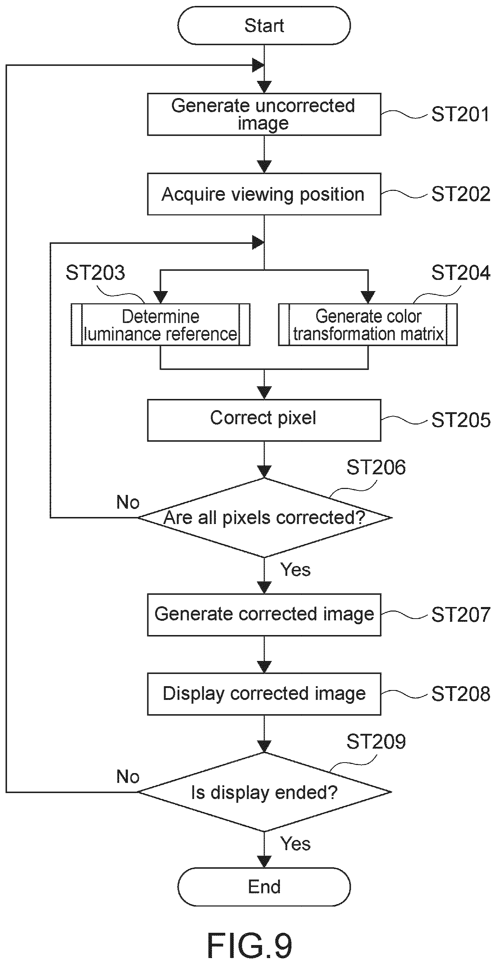

Fig. 9 is a flowchart showing a processing example of the image correction. The image generation section 20 generates the uncorrected image that will be a source of correction (Step 201). For example, the image generation section 20 acquires the uncorrected image stored in the storage section 15.

The visually recognizing position of the user is acquired (Step 202). The three-dimensional coordinate of the eye of the user is acquired by the visually recognizing position detection section 23.

Determination of the luminance reference is executed (Step 203). The following series of Steps 203 to 205 are executed for each pixel that constitutes the uncorrected image. For example, a series of processing is executed for 1 row and 1 column of the pixels in the uncorrected image, a series of processing is executed for 1 row and 2 column of pixels, and so on. The processing is executed in the order for all pixels. The order of the processing is not limited, and the processing may be executed in any order.

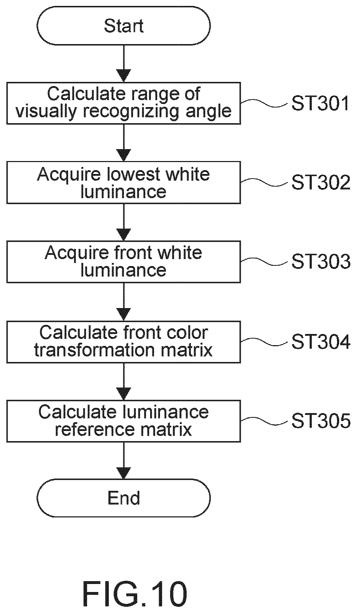

Hereinafter, an example in which the processing is first executed for 1 row and 1 column of the pixels. Fig. 10 is a flowchart showing a processing example of the determination of the luminance reference. In Step 203, the series of processing shown in Fig. 10 is executed.

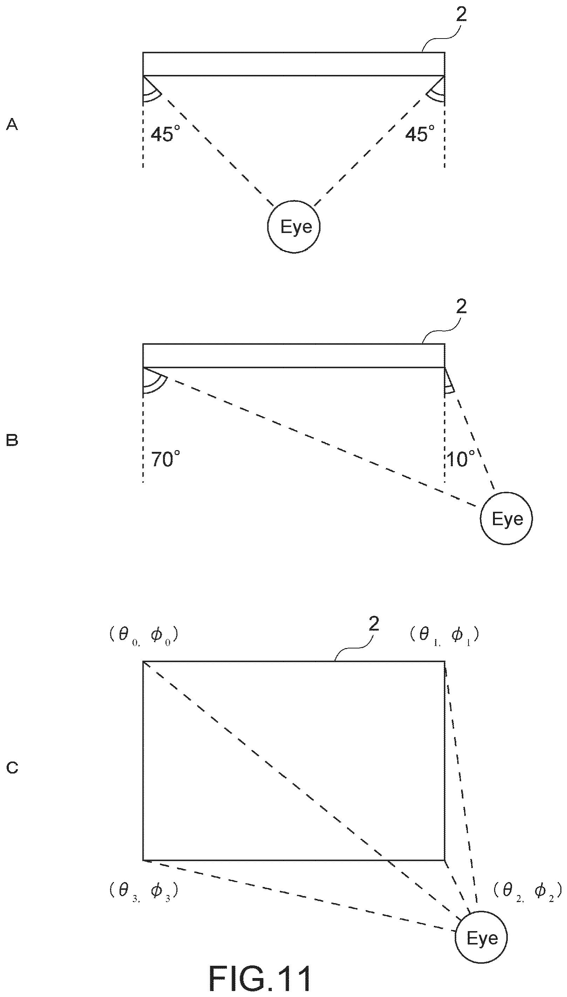

The range of the visually recognizing angle of the user is calculated (Step 301). Fig. 11 is schematic diagrams each showing a definition example of the range of the visually recognizing angle. Fig. 11A shows a schematic diagram showing the user standing in front of the center of the back panel 2 and visually recognizing the back panel 2. Fig. 11B shows a schematic diagram showing the user standing on the right side of the back panel 2 and visually recognizing the back panel 2.

The range of the visually recognizing angle is the range of possible visually recognizing angle for each pixel of the back panel 2. For example, in Fig. 11A, the leftmost pixel has the visually recognizing angle of 45°. The rightmost pixel has the visually recognizing angle of -45°. The center pixel has the visually recognizing angle of is 0°, for example. Although the visually recognizing angles of the other pixels also depend on the positions of the pixels, the visually recognizing angles of all pixels take values in the range of -45° to 45°. Conversely, no matter which pixel of the back panel 2 is viewed by the user in the position shown in Fig. 11A, the visually recognizing angle will never be outside the range of 80° or the like. Therefore, in the example of Fig. 11A, the range of visually recognizing angle is -45° to 45°. Since the symmetry in the $\theta$ direction is assumed in this example, the range of visually recognizing angles is calculated to be 0° to 45°.

Similarly, in the example in Fig. 11B, the range of visually recognizing angles is 10° to 70°. Since the user can visually recognize the back panel 2 while moving, the visually recognizing angle can always change, but the range of visually recognizing angle is calculated depending on the visually recognizing angle at that time as the angle range that depends on the visually recognizing angle.

In Figs. 11A and B, the ranges of the visually recognizing angles are described in the one dimension for simplicity, but in reality, the angle range is calculated for the visually recognizing angles ($\theta$, $\varphi$) in the two dimension, as shown in Fig. 11C. The range of the visually recognizing angles can also be referred to as the viewing angle.

In Step 301, the coordinates of all pixels are first calculated by the pixel position calculation section 24. For example, the coordinate of each pixel is stored in the storage section 15 in advance, and the coordinate of each pixel is read out to calculate the coordinate.

Next, the visually recognizing angle at each pixel is calculated by the viewing angle calculation section 25 based on the coordinate of each pixel calculated by the pixel position calculation section 24 and the coordinate of the eye of the user acquired by the visually recognizing position detection section 23 in Step 202. For example, the visually recognizing angles for all pixels are calculated by executing the following processing in the order:

the visually recognizing angle ($\theta = 40°$, 40°) is calculated based on the pixel "1 row and 1 column, coordinate (10, 10, 10)" and the eye coordinate (30, 30, 30),
the visually recognizing angle ($\theta = 40°$, 41°) is calculated based on the pixel "1 row and 2 column, coordinate (10, 20, 30)" and eye coordinate (30, 30, 30), ... The above-described values are only an example, and the specific processing order is not limited. Furthermore, the viewing angle calculation section 25 calculates the range of the visually recognizing angle based on the visually recognizing angles at all pixels.

The lowest white luminance is acquired (Step 302). First, the texture 32 stored in the storage section 15 is acquired by the texture acquisition section 27. Next, the luminance reference determination section 28 acquires the white luminance for each visually recognizing angle calculated by the viewing angle calculation section 25. Since the white luminance for each visually recognizing angle is stored in the texture 32, the luminance reference determination section 28 can acquire each white luminance from the texture 32 within the range of the visually recognizing angle. Furthermore, the white luminance with the lowest value among them is calculated as the lowest white luminance.

Front white luminance is acquired (Step 303). The white luminance at an angle ($\theta = 0°$, $\varphi = 0°$) is acquired from the texture 32 as the front white luminance by the luminance reference determination section 28.

A front color transformation matrix is calculated (Step 304). Specifically, the color transformation matrix at an angle ($\theta = 0°$, $\varphi = 0°$) is calculated by the luminance reference determination section 28. The following is an explanation of how the color transformation matrix is calculated without limiting the angle. The front calculation of the color transformation matrix corresponds to performing the following calculations at the angle ($\theta=0°$, $\varphi=0°$).

First, a tristimulus value of red is calculated by the following equation.

[Math. 1]

$$\{X_R, Y_R, Z_R\} = \left\{ \frac{x_R}{y_R,} \quad \frac{y_R}{y_R,} \quad \frac{1 - x_R - y_R}{y_R} \right\} R_{max} \, r$$

$X_R$, $Y_R$, $Z_R$: tristimulus value of red
$x_R$, $y_R$: chromaticity of red
$R_{max}$: Maximum value of red luminance
r: Red luminance value

When the back panel 2 is the LED, a change in the chromaticity $x_R$, $y_R$ with respect to the visually recognizing angle is relatively small, so in this embodiment, the chromaticity $x_R$, $y_R$ is treated as constant. $R_{max}$ is the maximum red luminance value calculated for normalization in Step 106 of the pre-processing. r is the red luminance value at the predetermined angle at which the calculation is performed and is acquired from the texture 32.

Similarly, the tristimulus values of green and blue are calculated. Next, the color transformation matrix is defined by the following equation.

[Math. 2]

$$[RGB2XYZ] = \begin{bmatrix} X_R & X_G & X_B \\ Y_R & Y_G & Y_B \\ Z_R & Z_G & Z_B \end{bmatrix}$$

[RGB2XYZ]: Color transformation matrix
$X_R$, $Y_R$, $Z_R$: tristimulus value of red
$X_G$, $Y_G$, $Z_G$: tristimulus values of green
$X_B$, $Y_B$, $Z_B$: tristimulus value of blue

The color transformation matrix [RGB2XYZ] calculated in this way is dependent on the angle ($\theta$, $\varphi$). In Step 304, the above-described calculation is executed at the angle ($\theta = 0°$, $\varphi = 0°$), and the color transformation matrix at ($\theta = 0°$, $\varphi = 0°$), that is, the front color transformation matrix is calculated. Since the front white luminance and the front color transformation matrix do not depend on the visually recognizing position of the user, the front white luminance may be acquired and the front color transformation matrix may be calculated in advance in the previous step of Step 202 (acquire visually recognizing position).

Next, a luminance reference matrix is calculated by the luminance reference determination section 28 using the following equation (Step 305).

[Math. 3]

$$[RGB2XYZ_{base}] = \frac{Lum_{base}}{Lum_{front}} [RGB2XYZ_{front}]$$

[RGB2XYZ$_{base}$]: Luminance reference matrix
Lum$_{base}$: lowest white luminance
Lum$_{front}$: front white luminance
[RGB2XYZ$_{front}$]: Front color transformation matrix

Thus, the luminance reference matrix is obtained by scaling the front color transformation matrix by multiplying it by a ratio of the lowest white luminance to the front white luminance acquired in Steps 302 and 303.

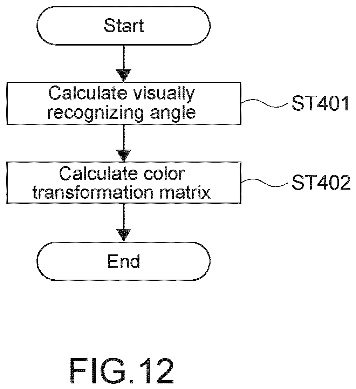

The color transformation matrix is generated (Step 204). Fig. 12 is a flowchart showing a processing example of generation of the color transformation matrix. In Step 204, a series of processing shown in Fig. 12 is executed.

The visually recognizing angle of the user is calculated (Step 401). The visually recognizing angle for 1 row and 1 column of the pixel is calculated by the same processing as the calculation of the range of the visually recognizing angle in Step 301.

The color transformation matrix is calculated (Step 402). Based on the visually recognizing angle for 1 row and 1 column of the pixel, the color transformation matrix for 1 row and 1 column of the pixel is calculated by the same processing as the calculation of the front color transformation matrix in Step 304.

That is, in Steps 401 and 402, the luminance values for each color corresponding to the visually recognizing angle are acquired from the texture 32, and the color transformation matrix is generated based on each acquired luminance value. Thus, the texture 32 is the image including the luminance value associated with the visually recognizing angle of the user. The color transformation matrix is also generated based on the visually recognizing angle and the stored texture 32.

In this example, Step 203 (determination of luminance reference) is performed before Step 204 (generation of color transformation matrix), but the generation of the color transformation matrix may be performed before the determination of the luminance reference.

A correction of the pixel is executed (Step 205). In this embodiment, the correction of the luminance and the chromaticity of the uncorrected image is executed based on the color transformation matrix. Specifically, the following calculation is performed by the luminance and color correction section 29 to first generate the corrected pixel.

[Math. 4]

$$\{R',G',B'\}^{T} = [RGB2XYZ]^{-1} [RGB2XYZ_{base}] \{R,G,B\}^{T}$$

R', G', B': RGB values of corrected pixel
[RGB2XYZ]: Color transformation matrix
[RGB2XYZ$_{base}$]: Luminance reference matrix
R', G', B': RGB value of pixel before correction

If the correction is not performed for any one of the pixels (No. in Step 206), processing in Steps 203 to 205 is performed again for the uncorrected pixels. For example, when the correction of 1 row and 1 column of pixel is completed, the next correction is performed in the following order: 1 row and 2 column, 1 row and 3 column, ..., 2 row and 1 column, ..., and so on. The order of correction is not limited.

When all pixels are corrected (Yes in Step 206), the corrected image is generated (Step 207). Specifically, the luminance color correction section 29 generates the corrected image in which each corrected pixel is integrated. The correction image may be stored in the storage section 15.

The corrected image is displayed (Step 208). Specifically, the display is controlled by the display control section 21 and the corrected image is displayed on the back panel 2. A decision is made as to whether or not to end the display by the display system 1 (Step 209). For example, the display is ended when a final frame of the video is reached or when the user performs an action to end viewing and listening (e.g., pressing an end button) (Yes in Step 209). If the display is not ended (No in Step 209), it returns to Step 201 to generate the image of a next frame, and the image correction and the display are similarly executed. A series of Steps 201 to 209 is performed for each frame in which an image is displayed, but a specific frame rate is not limited.

In this embodiment, the storage of the texture 32 by the storage section 15 (processing in Step 109) and the generation of the color transformation matrix (processing in Steps 203 and 204) are performed by controlling the GPU. That is, the GPU performs the processing for handling the texture 32, such as acquiring the luminance value from the texture 32 based on the visually recognizing angle, and generating the color transformation matrix based on the acquired luminance value. The processing of acquiring the texture 32 in Step 302 may be performed by the GPU, or may be performed by the CPU and then transferred to the GPU.

Pixel correction processing in Steps 203 to 205 may be performed in parallel, rather than sequentially for each pixel. Since the GPU has an advantage of being able to perform such parallel processing at high speed, it enables even faster processing.

The processing relating to the colorimetry (Steps 101 to 105) is performed by the CPU, for example, and the pixel correction processing (Steps 205 to 208) is performed by the GPU, for example. Of course, the processing relating to the colorimetry may also be performed by the GPU.

In this embodiment, a range of values that the visually recognizing angle can take is calculated. Specifically, the angle range such as 0° to 45° or 10° to 70° is calculated in Step 301. From the texture 32, the colorimetric luminance value at any one of the colorimetric angles within the same range of the colorimetric angles as the calculated range of the visually recognizing angles is acquired. Specifically, in Step 302, the lowest white luminance in the angle range such as 0° to 45° or 10° to 70° is acquired.

Furthermore, based on the acquired colorimetric luminance values, the luminance reference is determined that serves as the reference for correcting the luminance value of the uncorrected image. Specifically, the luminance reference matrix is calculated in Step 305. The calculation of the luminance reference matrix corresponds to the determination of the luminance reference according to the present technology. In this example, the lowest white luminance is acquired to calculate the luminance reference matrix, but the luminance values may be acquired based on other references.

The lowest white luminance may be acquired from all angle ranges (0° to 80° and -80° to 80°) without calculating the range of values that the visually recognizing angle can take.

When the back panel 2 has a simple rectangular shape, as in this example, it is possible that the maximum and minimum values of the visually recognizing angles are always the visually recognizing angles at pixels located on four sides or four corners, regardless of the visually recognizing position of the user. In such a case, the visually recognizing angles may be calculated only for the pixels located on the four sides or the four corners, and the angle range may be calculated based only on these visually recognizing angles.

In some cases, due to light distribution characteristics, the maximum and minimum values of the white luminance are always taken at the visually recognizing angles of the pixels located at the four edges or the four corners. In such cases, the angle range may not be calculated and the lowest white luminance may be acquired by calculating the visually recognizing angles only for the pixels located at the four sides or the four corners and comparing the white luminances at these visually recognizing angles.

Alternatively, when the display panels are arranged in a spherical shape or when a huge LED panel is used, information about the direction of the line of sight may be used in combination. For example, it is possible to reduce an amount of calculation by processing only a screen in front of human itself. An FOV (Field Of view) may be specified as a parameter to narrow a processing range. In particular, when the viewing direction can be acquired, the luminance value may be searched only for the pixel in the center of the field of view. The screen may be divided into patches of a certain size, and the luminance value may be searched only at a representative point. Such a method reduces the amount of calculation and speeds up the processing.

Of course, when the display panel has a complicated shape, the visually recognizing angle may be calculated for all pixels as usual. Other factors such as a shape of the display panel may be taken into consideration, and an angle range calculation and luminance value acquisition may be performed in any manner.

By specifying the luminance reference in advance, the image correction processing may be executed in a manner that does not involve dynamic decisions. In this case, the processing in Step 203 (calculation of luminance reference matrix) is performed only once, omitting Steps 301 and 302, and the same luminance reference matrix [RGB2XYZ$_{base}$] is always used in Step 205 (calculation of RGB value of corrected pixel) (Math. 4).

Banding (stripes appearing in image) may be noticeable when the corrected image is displayed. To reduce this, separate dither processing (processing that adds random noises and converts banding into a form that cannot be perceived by humans) may be performed.

When the colorimetry is performed from an oblique direction, the luminance values including luminance deviations may be acquired due to the light distribution characteristics of the display panel, and accurate colorimetry may not be performed. To prevent this, processing may be performed to make a comparison format less prone to overflow. Specifically, for example, for the chromaticity of white defined with reference to chromaticity, the data of the maximum luminance that can be output at that chromaticity for each viewing angle can be prepared to enable comparison under a uniform scale.

As described above, in this embodiment, the texture 32 is stored under the control of the GPU. In addition, the color transformation matrix is generated based on the visually recognizing angle of the user to the back panel 2. Furthermore, the luminance and the chromaticity of the image are corrected based on the generated color transformation matrix. This enables the GPU to efficiently correct the image according to the visually recognizing angle of the user.

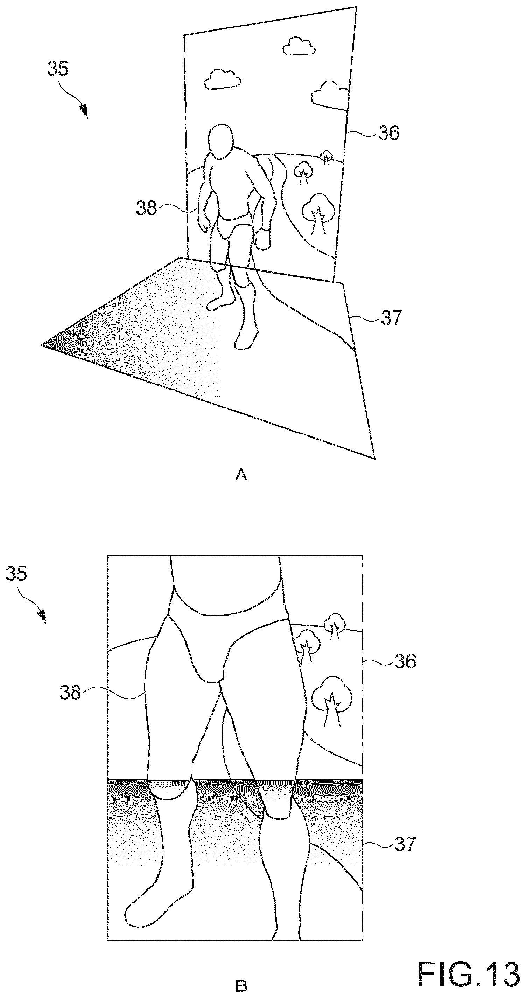

Fig. 13 is schematic diagrams each showing a display system 35 of a comparative example. The display system 35 of the comparative example has a back panel 36 and a floor panel 37 similar to the display system 1 according to the present technology shown in Fig. 1, with which a human image 38 is displayed.

In the display system 35, no image correction is executed. That is, the image generated by the image generation section is displayed as it is, without the generation of the color transformation matrix depending on the visually recognizing angle and the correction of the image using the color transformation matrix, as in the display system 1 according to the present technology. That is, the image, which is determined not depending on the visually recognizing angle, is displayed as is.

As shown in Fig. 13A, the floor panel 37 may appear discolored in the display system 35. Specifically, when the display system 35 is viewed obliquely, the area around a boundary appears to discolor to a color such as yellow or cyan. Also, as shown in Fig. 13B, the boundary between two display panels and a portion of the human image 38 that is located in front of the boundary between the two display panels (near knees) may appear discolored.

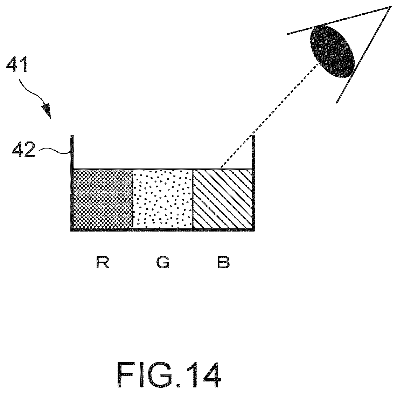

Fig. 14 is a schematic diagram showing a state of pixel vignetting. As shown in Fig. 14, a pixel 41 of the display panel, including the LED, is configured of an RGB unit and resin 42 that stores it. A top edge of the resin 42 is higher than a top edge of the RGB unit, so that when a B unit is viewed from upper right, a part of the B unit is blocked by the resin 42 and is not visible. That is, the R and G units are fully visible, while the B unit is only partially visible. This causes red and green to appear stronger relative to blue, and the pixel appears yellowish to the user.

This phenomenon is sometimes called pixel vignetting and is known to be part of the cause of the discolored appearance of the display panel as shown in Fig. 13. Similarly, when the display panel is viewed from a different angle, it may appear to be discolored in a different color. Thus, the panel including the LED has the light distribution characteristics and the luminance color changes depending on the angle upon viewing and listening. In addition, the display panel using the LED is sometimes equipped with a mechanism that diffuses light from elements, and the presence of this mechanism is one of the causes of the light distribution characteristics.

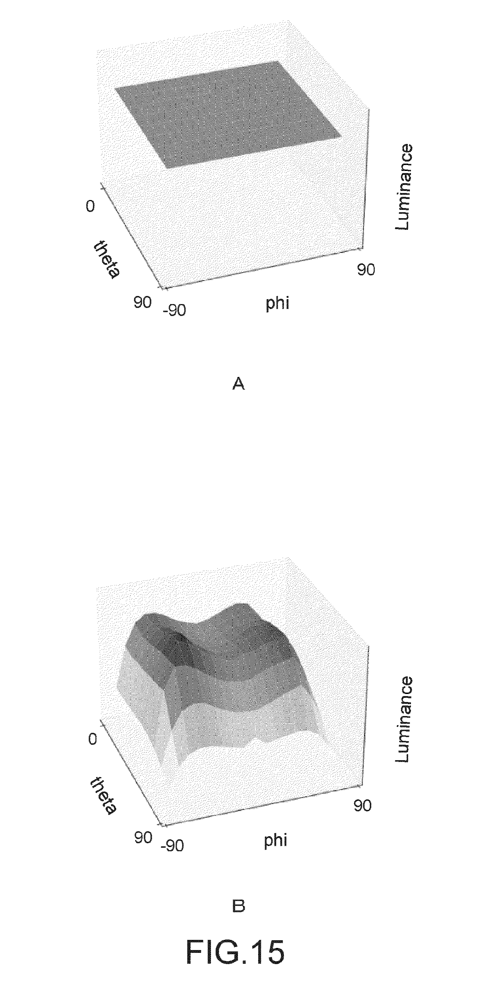

Fig. 15 is schematic diagrams showing an example of the light distribution characteristics of the display panel. Fig. 15A shows luminance value distribution of the display panel with no light distribution characteristics. Fig. 15B shows the luminance value distribution of the display panel with the light distribution characteristics. As shown in Fig. 15A, in an ideal display panel, the luminance value is constant regardless of the visually recognizing angle, and no discoloration of the display panel occurs without any special processing. However, in reality, due to the above causes, the display panel has the light distribution characteristics and the luminance value changes depending on the visually recognizing angle, as shown in Fig. 15B.

This problem is widely recognized, and it is common to try to improve tangibly, for example, by devising a surface of the display panel to diffuse light isotropically. However, even with such devising, it is not possible to completely eliminate the change in the luminance color depending on the viewing angle, and there are cases where an experience is disturbed in a 6DoF (6 Degrees of Freedom) viewing and listening mode, in which a viewer is free to move while viewing a displayed object.

In the present technology, the image is corrected depending on the visually recognizing position of the user, and the image with the luminance value depending on the visually recognizing position is displayed on the display panel. In addition, by generating the color transformation matrix using (Math. 1) to (Math. 4) and correcting the image using the color transformation matrix, the corrected image is generated such that the luminance value perceived by the user does not change depending on the visually recognizing angle. This suppresses the deviations in the luminance values of the images displayed on the display panel, as shown in Fig. 1, and provides a high-quality viewing experience.

In the present technology, the information (luminance values) used to correct the image is stored in the texture, and the GPU performs the processing for handling the texture. This enables high-speed processing.

The GPU is an arithmetic apparatus specialized for a screen display and image processing, and is indispensable for image display on high-resolution panels such as those in widespread use today. Since the GPU has a good ability to perform the same operations in parallel, processing for each pixel can be performed at high speed. The processing performed for each pixel includes texture mapping, which is often optimized by a processing system. For example, when acquiring a value at arbitrary coordinate using a normal array, it needs to acquire first information from a discrete index and then perform explicit interpolation. On the other hand, when the texture is used, it is possible to acquire the value at arbitrary coordinate without explicit calculation.

As an example of the technology in the art, it is known that information used for the image correction is held in a matrix format. A correction matrix used in such techniques generally contain $3 \times 3$ elements or more. On the other hand, the texture cannot be used for such technique because a typical texture is configured of up to four channels.

Therefore, when the correction matrix is processed on the GPU, the processing would be expected to be executed as normal array data. In this case, when acquiring the value of the coordinate corresponding to an arbitrary viewing angle, it needs to acquire first the information from the discrete index, and then perform explicit interpolation. Here, the coordinate corresponding to the viewing angle represents the coordinate as an angle, meaning a texture coordinate or an angle point that does not hold the correction matrix. Such acquisition of the information using the normal array data is less efficient for processing than when using the texture with the corresponding architecture.

The present technology uses the array data needed for the color correction as the texture, enabling an efficient calculation that takes full advantage of the GPU. The present technology holds the necessary information as normalized RGBW luminance data, not as the matrix, and performs a matrix calculation in the GPU, thus enabling the use of a computation processing flow through the texture.

In the present technology, the luminance value associated with the visually recognizing angle is obtained from the texture. Specifically, the colorimetric luminance value at the same colorimetric angle as the visually recognizing angle is acquired from the texture. A color transformation matrix is generated based on the acquired colorimetric luminance values. This allows the image to be corrected with high accuracy.

In the present technology, a colorimetric image is measured and a colorimetric luminance value is generated for each colorimetric angle. A texture including each colorimetric luminance value is also generated. As a result, the color transformation matrix is generated with high accuracy.

In the present technology, the colorimetric luminance value at any one of the colorimetric angles is acquired from the texture, and the luminance reference for the image correction is determined based on the colorimetric luminance value. This makes it possible to avoid correction that results in excessively reduced luminance or overflow of RGB values due to the correction.

A range of possible values for the visually recognizing angle may be calculated and the colorimetric luminance value at any one of the colorimetric angles may be acquired from the angle range. This makes it possible to minimize luminance degradation. Furthermore, the amount of calculation is reduced and faster processing is realized.

In the present technology, the visually recognizing position is acquired, and the visually recognizing angle and the range of visually recognizing angles are calculated based on the visually recognizing position. This allows the visually recognizing angle and the range of visually recognizing angles to be calculated with high accuracy.

<Other embodiments>

The present technology is not limited to the embodiments described above, and various other embodiments can be realized.

[Application to multiple panels]

The present technology is applicable when multiple display panels are included in the display system 1. For example, in addition to the case where two display panels are included as shown in Fig. 1, there may be a case where a number of display panels are installed to surround the user.

In this embodiment, when there are the multiple display panels, the texture 32 is generated for each of the multiple display panels. For example, when two display panels A and B exist, a texture A corresponding to the display panel A is generated by the texture generation section 26, and a texture B corresponding to the display panel B is generated. The image displayed on the display panel A is then corrected by the color transformation matrix generated based on the texture A. On the other hand, the image displayed on the display panel B is corrected by the color transformation matrix generated based on the texture B.

By generating the texture 32 separately for each display panel in this way, it is possible to execute appropriate image correction depending on the arrangement of the display panels. When the two display panels are placed connected at an angle, it can happen that a luminance color shifts at the boundary of the display panels due to a sudden difference in angle. When the color correction is performed forcibly in such a situation, there is a high possibility that the RGB values will overflow after the conversion and the colors will not match. However, with the present technology, a color conversion reference is dynamically defined so that the RGB values do not overflow, and a stable color correction can be performed.

When generating the reference luminance matrix, a search for the lowest luminance value may be performed at the boundary where the display panels meet each other, and a search for the luminance value on the side of the display panel with the lowest luminance value. In order to suppress a luminance color difference at the boundary of the display panels, a method may be used in which the luminance values are acquired with emphasis placed near the boundary where the panels meet.

Similarly, when three or more display panels are included, each texture 23 may be generated individually. A common texture 23 may also be generated when the light distribution characteristics of the multiple display panels are identical.

[Luminance improvement measures]

A conversion using an algorithm of the present technology may result in a reduced luminance of the image. However, in a configuration that includes the multiple display panels, there is a demand to match colors only at the boundaries, and to display the images with higher luminance at positions away from the boundary.

In this embodiment, the corrections of the luminance and the chromaticity of the uncorrected image are executed depending on the distance between the pixel displayed by the display panel and the boundary of the image displayed by the display panel. Specifically, the pixel is corrected in Step 205 according to the following equation.

[Math. 5]

$$\{R', G', B'\}^T = [RGB2XYZ]^{-1} LumCoef [RGB2XYZ_{base}] \{R, G, B\}^T$$

R', G', B': RGB value of corrected pixel
[RGB2XYZ]: Color transformation matrix
Lumcoef: Coefficient of luminance correction value
[RGB2XYZ$_{(base)]}$: Luminance reference matrix
R', G', B': RGB value of pixel before correction

The coefficient Lumcoef of the luminance correction value is determined depending on a physical distance from the boundary of the image displayed by the display panel. For example, when the distance between the pixel to be corrected and the boundary is large, Lumcoef is determined so that the luminance value of the corrected pixel is higher. On the other hand, when the distance is small, Lumcoef is determined so that the luminance value of the corrected pixel becomes lower. The physical distance between the pixel and the boundary is calculated by the pixel position calculation section 24, for example.

An image corrected in this way will have a higher luminance value away from the boundary and a lower luminance value near the boundary. This makes it possible to increase the luminance values in an area where no color matching is needed, such as the center of the image, and to display an even higher quality image.

[For use in virtual production]

In television and film production, LED screens displaying images are sometimes used as set backgrounds. This type of filming technique is generally referred to as virtual production. The present technology can be applied to such virtual production.

With this present technology, the image displayed on the display panel that serves as the background is corrected. In the virtual production, it is sufficient to correct only those pixels displayed on the display panel that are caught by the camera. Therefore, the range of pixels caught is estimated from information such as a position and an angle of view of the camera, and the luminance reference is determined and the pixel correction is executed only in the range. In this case, to allow some leeway, the processing may be executed over a slightly wider range than the calculated range.

Alternatively, a real object such as a human or an object may be placed in front of the display panel and the pixel may be shielded. The correction may be omitted for such pixels. The amount of calculation can be reduced and the processing can be accelerated.

In addition, when the display panel is placed on the ceiling, the luminance reference may change abruptly at the moment the boundary of the display panel on the ceiling is reflected. For this reason, separate stabilization processing in a time direction may be introduced. In this embodiment, the correction of the luminance and the chromaticity of the uncorrected image is executed so that the amount of change in the luminance value of the corrected image in a predetermined time width does not exceed a predetermined value (threshold).

Specifically, the stabilization processing of the luminance reference value is executed according to the following equation.

[Math. 6]

$$Lum(t) = Lum_{base}(t - \Delta t) + absmin(\Delta Lum_{limit}, Lum_{base}(t) - Lum_{base}(t - \Delta t))$$

Lum: Luminance reference value after stabilization processing

$Lum_{base}$: Luminance reference value before stabilization processing

$\Delta Lum_{limit}$: Regulation value of amount of change

Note that absmin assigns a sign of a second argument to a smaller value of arguments compared in absolute value.

$\Delta t$ corresponds to a predetermined time width, and, for example, is the time width of one frame. Also, $\Delta Lum_{limit}$ corresponds to a predetermined value. For example, when the change in the luminance value in one frame is to be kept 100 or less, it is set to $\Delta Lum_{limit}$ = 100.

For example, when the luminance value of the previous frame $(t - \Delta t)$ is 200 and the luminance value of the current frame $(t)$ is 250, $\Delta Lum_{(limit)}$ = 100, $Lum_{base}(t) - Lum_{base}(t - \Delta t)$ = 250 - 200 = 50, so the value of absmin is 50. Therefore, $Lum(t)$ = 250, which is equal to $Lum_{base}(t)$. That is, when the change in the luminance value between the previous frame and the current frame is less than 100, the luminance value of the current frame is used as it is.

On the other hand, for example, when the luminance value of the previous frame is 200 and the luminance value of the current frame is 350, the value of absmin is 100. Therefore, $Lum(t)$ = 300. Thus, when the change in the luminance value is greater than 100, the amount of change is suppressed to the regulation value of +100.

Similarly, when the luminance value changes in a negative direction, the luminance value of the current frame is used as it is, when the amount of change is between 0 and -100, and is suppressed to -100 when the amount of change is less than -100.

This suppresses a sudden change in the luminance reference and allows for a more accurate image correction. In the virtual production, filmed images are later edited by hand to correct inconsistencies, but the present technology allows the high-quality images to be filmed in advance, thereby reducing the time and effort required for post-processing.

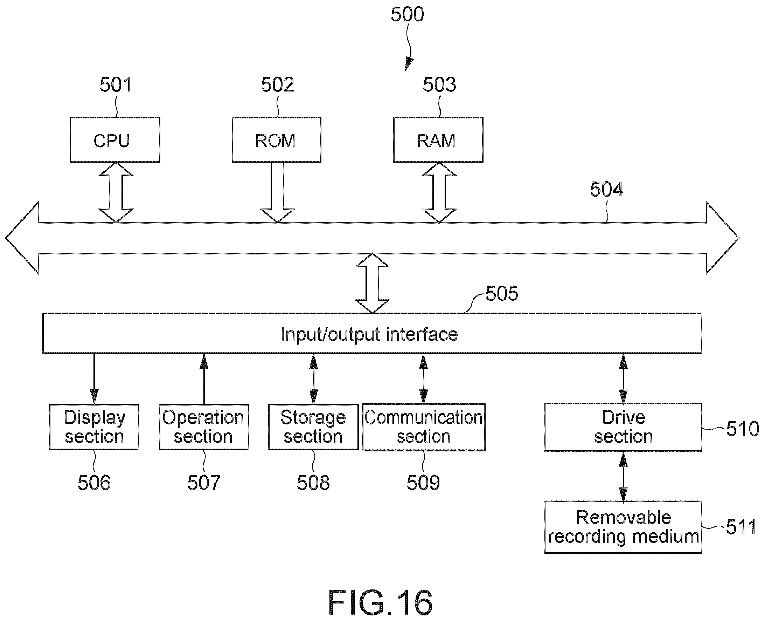

Fig. 16 is a block diagram showing a hardware configuration example of a computer 500 that can realize the image processing apparatus 11. The computer 500 has a CPU 501, a ROM 502, a RAM 503, an input/output interface 505, and a bus 504 that connects them to each other. The input/output interface 505 is connected to a display section 506, an operation section 507, a storage section 508, a communication section 509, and a drive section 510, etc.

The display section 506 is a display device using, for example, liquid crystal, EL, etc. The input section 507 is a keyboard, a pointing device, a touch panel, or other operating device, for example. When the input section 507 includes the touch panel, the touch panel can be integrated with the display section 506. The storage section 508 is a non-volatile storage device, for example, such as an HDD, a flash memory, or other solid-state memory. The drive section 510 is a device capable of driving a removable recording medium 511, for example, such as an optical recording medium, a magnetic recording tape, and the like.

The communication section 509 is a modem, a router, or other communication equipment that can be connected to the LAN or the WAN to communicate with other devices. The communication section 509 may communicate using either wired or wireless communication. The communication section 509 is often used separately from the computer 500.

The image processing by the computer 500 having the above-described hardware configuration is realized by cooperation of software stored in the storage section 508 or the ROM 502, etc., and a hardware resource of the computer 500. Specifically, the image processing method in the present technology is realized by loading a program including the software stored in ROM 502, etc. into RAM 503 and executing it.

The program is installed on the computer 500 via the removable recording medium 511, for example. Alternatively, the program may be installed on the computer 500 via a global network, etc. Any other non-transitory storage medium readable by the computer 500 may be used.

In the present disclosure, a system means a set of a plurality of components (apparatus, module (parts), etc.), regardless of whether all components are in the same enclosure or not. Thus, a plurality of apparatuses housed in separate enclosures and connected via a network, and a plurality of modules housed in a single enclosure are each the system.

The execution of the image processing method according to the present technology by the computer system includes the both cases where a single computer executes, for example, storing the texture, acquiring the texture, acquiring the luminance value, generating the color transformation matrix, determining the luminance reference, correcting the image, displaying the image, etc. and where different computers execute each processing. The execution of each processing by the predetermined computer also includes having another computer execute a part or all of the processing and acquiring the results. That is, the image processing method according to the present technology can be applied to a cloud computing configuration in which a single function is shared and processed jointly by a plurality of apparatuses via a network.

The image display system, the image processing apparatus, the display panel, the texture configuration, and each processing flow, etc. described with reference to the drawings are embodiments only, and may be modified arbitrarily without departing from the intent of the present technology. That is, any other configuration, algorithm, etc. may be adopted to implement the present technology.

It is also possible to combine at least two of feature portions of the present technology described above. That is, the various characteristic parts described in each embodiment may be arbitrarily combined with interchangeably between embodiments. The various effects described above are examples only and are not limited, and other effects may also be achieved.

The present technology can also be configured as follows.

(1) An image processing method, including controlling a graphics processing apparatus to:

acquire a corrective luminance texture including a luminance value associated with a visually recognizing angle of a user with respect to at least one display panel;
generating a color transformation matrix based on the visually recognizing angle and the corrective luminance texture acquired; and
correcting luminance and chromaticity of a rendering image based on the color transformation matrix generated.

(2) The image processing method according to (1), in which
generation of the color transformation matrix includes acquiring the luminance value associated with the visually recognizing angle from the corrective luminance texture, and is performed based on luminance value acquired.

(3) The image processing method according to (1) or (2), further including:

performing colorimetry of a target image displayed by the display panel;
generating the luminance value for each colorimetric angle to the display panel as a colorimetric luminance value; and
generating the corrective luminance texture including each colorimetric luminance value generated.

(4) The image processing method according to (3), further including:

acquiring the colorimetric luminance value at the same colorimetric angle as the visually recognizing angle from the corrective luminance texture, in which
generation of the color transformation matrix is performed based on the colorimetric luminance value acquired.

(5) The image processing method according to (3), further including:

acquiring the colorimetric luminance value at any one of the colorimetric angles within the same range of the colorimetric angle as a range of the visually recognizing angle from the corrective luminance texture; and
determining, based on the colorimetric luminance value acquired, a luminance reference that serves as a reference for correcting the luminance value of the rendering image.

(6) The image processing method according to (5), further including:

calculating a range of a value that the visually recognizing angle can take; and
acquiring the colorimetric luminance value at any one of the colorimetric angles within the same range of the colorimetric angle as a range of the visually recognizing angle calculated from the corrective luminance texture.

(7) The image processing method according to any one of (1) to (6), further including:

acquiring a visually recognizing position of the user with respect to the display panel; and
calculating the visually recognizing angle based on the visually recognizing position acquired.

(8) The image processing method according to any one of (3) to (6), in which
the corrective luminance texture is generated for each of a plurality of the display panels.
(9) The image processing method according to any one of (1) to (8), further including:
controlling the display panel to display a stereoscopic image.
(10) The image processing method according to any one of (1) to (9), in which
the luminance and the chromaticity of the rendering image are corrected depending on a distance between a pixel displayed by the display panel and a boundary of the image displayed by the display panel.
(11) The image processing method according to any one of (1) to (11), in which
the luminance and the chromaticity of the rendering image are corrected so that a change amount of the luminance value of the rendering image corrected over a predetermined time width does not exceed a threshold value.
(12) An image processing apparatus, including:

a storage section that stores a corrective luminance texture that includes a luminance value associated with a visually recognizing angle of a user with respect to at least one display panel; and
a graphics processing apparatus configured to generate a color transformation matrix based on the visually recognizing angle and the corrective luminance texture stored by the storage section, and to correct luminance and chromaticity of a rendering image based on the color transformation matrix.

(13) A recording medium into which a program is written causes a computer system to execute an instruction to control a graphics processing apparatus to:

acquire a corrective luminance texture including a luminance value associated with a visually recognizing angle of a user with respect to at least one display panel;
generate a color transformation matrix based on the visually recognizing angle and the corrective luminance texture acquired; and
correct luminance and chromaticity of a rendering image based on the color transformation matrix generated.

Reference Signs List

1 display system
2 back panel
3 floor panel
4 human image
8 colorimeter
11 image processing apparatus
15 storage section
20 image generation section
21 display control section
22 colorimeter control section
23 visually recognizing position detection section
24 pixel position calculation section
25 viewing angle calculation section
26 texture generation section
27 texture acquisition section
28 luminance reference determination section
29 luminance color correction section
32 texture

**Claims**

1. An image processing method, comprising controlling a graphics processing apparatus to:

acquire a corrective luminance texture including a luminance value associated with a visually recognizing angle of a user with respect to at least one display panel;
generating a color transformation matrix based on the visually recognizing angle and the corrective luminance texture acquired; and
correcting luminance and chromaticity of a rendering image based on the color transformation matrix generated.

2. The image processing method according to claim 1, wherein generation of the color transformation matrix includes acquiring the luminance value associated with the visually recognizing angle from the corrective luminance texture, and is performed based on luminance value acquired.

3. The image processing method according to claim 1, further comprising:

performing colorimetry of a target image displayed by the display panel;
generating the luminance value for each colorimetric angle to the display panel as a colorimetric luminance value; and
generating the corrective luminance texture including each colorimetric luminance value generated.

4. The image processing method according to claim 3, further comprising:

   acquiring the colorimetric luminance value at the same colorimetric angle as the visually recognizing angle from the corrective luminance texture, wherein
   generation of the color transformation matrix is performed based on the colorimetric luminance value acquired.

5. The image processing method according to claim 3, further comprising:

   acquiring the colorimetric luminance value at any one of the colorimetric angles within the same range of the colorimetric angle as a range of the visually recognizing angle from the corrective luminance texture; and
   determining, based on the colorimetric luminance value acquired, a luminance reference that serves as a reference for correcting the luminance value of the rendering image.

6. The image processing method according to claim 5, further comprising:

   calculating a range of a value that the visually recognizing angle can take; and
   acquiring the colorimetric luminance value at any one of the colorimetric angles within the same range of the colorimetric angle as a range of the visually recognizing angle calculated from the corrective luminance texture.

7. The image processing method according to claim 1, further comprising:

   acquiring a visually recognizing position of the user with respect to the display panel; and
   calculating the visually recognizing angle based on the visually recognizing position acquired.

8. The image processing method according to claim 3, wherein
   the corrective luminance texture is generated for each of a plurality of the display panels.

9. The image processing method according to claim 1, further comprising:
   controlling the display panel to display a stereoscopic image.

10. The image processing method according to claim 1, wherein
    the luminance and the chromaticity of the rendering image are corrected depending on a distance between a pixel displayed by the display panel and a boundary of the image displayed by the display panel.

11. The image processing method according to claim 1, wherein
    the luminance and the chromaticity of the rendering image are corrected so that a change amount of the luminance value of the rendering image corrected over a predetermined time width does not exceed a threshold value.

12. An image processing apparatus, comprising:

    a storage section that stores a corrective luminance texture that includes a luminance value associated with a visually recognizing angle of a user with respect to at least one display panel; and
    a graphics processing apparatus configured to generate a color transformation matrix based on the visually recognizing angle and the corrective luminance texture stored by the storage section, and to correct luminance and chromaticity of a rendering image based on the color transformation matrix.

13. A recording medium into which a program is written causes a computer system to execute an instruction to control a graphics processing apparatus to:

    acquire a corrective luminance texture including a luminance value associated with a visually recognizing angle of a user with respect to at least one display panel;
    generate a color transformation matrix based on the visually recognizing angle and the corrective luminance texture acquired; and
    correct luminance and chromaticity of a rendering image based on the color transformation matrix generated.

A

B

FIG.1

1

11    16

**Image processing apparatus**

**Controller**

| 23 Visually recognizing position detection section | 24 Pixel position calculation section | 21 Display control section | 20 Image generation section |

| 25 Viewing angle calculation section | 28 Luminance reference determination section | 27 Texture acquisition section | 22 Colorimeter control section |

| 26 Texture generation section | 29 Luminance color correction section |

17

| 12 Display section | 13 Operation section | 14 Communication section | 15 Storage section |

2 Back panel

7 Speaker

9 Camera

3 Floor panel

8 Colorimeter

10 Ranging sensor

# FIG.2

```
                    ┌─────────────┐
                    │    Start    │
                    └─────────────┘
                           │
                           ▼
                 ┌──────────────────┐
      ┌─────────▶│  Set panel angle │ ──── ST101
      │          └──────────────────┘
      │                    │
      │                    ▼
      │          ┌──────────────────┐
      │          │   Display color  │ ──── ST102
      │          └──────────────────┘
      │                    │
      │                    ▼
      │          ┌──────────────────┐
      │          │    Colorimetry   │ ──── ST103
      │          └──────────────────┘
      │                    │
      │                    ▼
      │          ┌──────────────────┐
      │          │ Store colorimetric│──── ST104
      │          │  luminance value │
      │          └──────────────────┘
      │                    │         ST105
      │                    ▼
      │    No         ╱ Is        ╲
      └──────────────╱ colorimetry  ╲
                     ╲ performed     ╱
                      ╲at all angles╱
                       ╲ and all   ╱
                        ╲colors?  ╱
                            │
                           Yes
                            ▼
              ┌──────────────────────┐
              │Extract maximum value │──── ST106
              │for each color        │
              │luminance value       │
              └──────────────────────┘
                            │
                            ▼
              ┌──────────────────────┐
              │  Divide each color   │──── ST107
              │  luminance value by  │
              │ maximum luminance    │
              │       value          │
              └──────────────────────┘
                            │
                            ▼
              ┌──────────────────────┐
              │   Generate texture   │──── ST108
              └──────────────────────┘
                            │
                            ▼
              ┌──────────────────────┐
              │    Store texture     │──── ST109
              └──────────────────────┘
                            │
                            ▼
                    ┌─────────────┐
                    │     End     │
                    └─────────────┘
```

FIG.3

A

B

FIG.4

FIG.5

| Display color (R,G,B) in float | Colorimetric angle $(\theta, \phi)$ | Luminance value |
|---|---|---|
| Red(1.0,0.0,0.0) | $(\theta_0, \phi_0)$ | $LumR_{(0,0)}$ |
| Red(1.0,0.0,0.0) | $(\theta_0, \phi_1)$ | $LumR_{(0,1)}$ |
| $\vdots$ | $\vdots$ | $\vdots$ |
| Green(0.0,1.0,0.0) | $(\theta_0, \phi_0)$ | $LumG_{(0,0)}$ |
| $\vdots$ | $\vdots$ | $\vdots$ |
| Blue(0.0,0.0,1.0) | $(\theta_0, \phi_0)$ | $LumB_{(0,0)}$ |
| $\vdots$ | $\vdots$ | $\vdots$ |
| White(1.0,1.0,1.0) | $(\theta_0, \phi_0)$ | $LumW_{(0,0)}$ |
| $\vdots$ | $\vdots$ | $\vdots$ |

FIG.6

A

B

FIG.7

32

| R<br>Red<br>lumin<br>-ance | G<br>Green<br>lumin<br>-ance | B<br>Blue<br>lumin<br>-ance | A<br>White<br>lumin<br>-ance |
|---|---|---|---|

A

32

Dark pink

Red

Blue

Light pink

B

# FIG.8

FIG.9

```
        ┌─────────────┐
        │    Start    │
        └─────────────┘
               │
               ▼
   ┌───────────────────────┐
   │   Calculate range of  │──── ST301
   │ visually recognizing angle │
   └───────────────────────┘
               │
               ▼
   ┌───────────────────────┐
   │   Acquire lowest white │──── ST302
   │       luminance        │
   └───────────────────────┘
               │
               ▼
   ┌───────────────────────┐
   │   Acquire front white  │──── ST303
   │       luminance        │
   └───────────────────────┘
               │
               ▼
   ┌───────────────────────┐
   │   Calculate front color │──── ST304
   │  transformation matrix  │
   └───────────────────────┘
               │
               ▼
   ┌───────────────────────┐
   │   Calculate luminance  │──── ST305
   │    reference matrix     │
   └───────────────────────┘
               │
               ▼
        ┌─────────────┐
        │     End     │
        └─────────────┘
```

# FIG.10

FIG.11

```
        ┌─────────────┐
        │    Start     │
        └─────────────┘
               │
               ▼
   ┌────────────────────────┐
   │   Calculate visually    │─────── ST401
   │   recognizing angle     │
   └────────────────────────┘
               │
               ▼
   ┌────────────────────────┐
   │    Calculate color      │─────── ST402
   │  transformation matrix  │
   └────────────────────────┘
               │
               ▼
        ┌─────────────┐
        │     End      │
        └─────────────┘
```

# FIG.12

A

B

FIG.13

41

42

R     G     B

# FIG.14

A

B

FIG.15

FIG.16

500

501 CPU
502 ROM
503 RAM

504

505 Input/output interface

506 Display section
507 Operation section
508 Storage section
509 Communication section
510 Drive section
511 Removable recording medium

## INTERNATIONAL SEARCH REPORT

| International application No. |
| --- |
| **PCT/JP2024/004922** |

### A. CLASSIFICATION OF SUBJECT MATTER

*H04N 13/122*(2018.01)i; *G06F 3/01*(2006.01)i; *G09G 5/06*(2006.01)i; *G09G 5/10*(2006.01)i; *H04N 13/15*(2018.01)i; *H04N 13/38*(2018.01)i; *H04N 13/376*(2018.01)i

FI:  H04N13/122; H04N13/376; H04N13/38; G09G5/10 B; G09G5/06; H04N13/15; G06F3/01 510

According to International Patent Classification (IPC) or to both national classification and IPC

### B. FIELDS SEARCHED

Minimum documentation searched (classification system followed by classification symbols)

H04N13/122; G06F3/01; G09G5/06; G09G5/10; H04N13/15; H04N13/38; H04N13/376

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2011-8002 A (MITSUBISHI ELECTRIC CORPORATION) 13 January 2011 (2011-01-13) entire text, all drawings | 1-13 |
| A | WO 2020/183961 A1 (SONY CORP.) 17 September 2020 (2020-09-17) entire text, all drawings | 1-13 |
| A | US 2009/0251748 A1 (OCE-TECHNOLOGIES B.V.) 08 October 2009 (2009-10-08) entire text, all drawings | 1-13 |
| A | US 2016/0063951 A1 (QUALCOMM INCORPORATED) 03 March 2016 (2016-03-03) entire text, all drawings | 1-13 |
| A | CN 113282175 A (BOE TECHNOLOGY GROUP CO., LTD.) 20 August 2021 (2021-08-20) entire text, all drawings | 1-13 |

[✓] Further documents are listed in the continuation of Box C.  [✓] See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **15 April 2024** | **14 May 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
| --- |
| **PCT/JP2024/004922** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 115439300 A (BEIJING CHJ AUTOMOTIVE INFORMATION TECHNOLOGY CO.. LTD.) 06 December 2022 (2022-12-06)<br>entire text, all drawings | 1-13 |
| A | JP 2013-250621 A (PANASONIC CORP.) 12 December 2013 (2013-12-12)<br>entire text, all drawings | 1-13 |

Form PCT/ISA/210 (second sheet) (July 2022)

## INTERNATIONAL SEARCH REPORT
### Information on patent family members

International application No.

**PCT/JP2024/004922**

| Patent document cited in search report | | | Publication date (day/month/year) | Patent family member(s) | | | Publication date (day/month/year) |
|---|---|---|---|---|---|---|---|
| JP | 2011-8002 | A | 13 January 2011 | (Family: none) | | | |
| WO | 2020/183961 | A1 | 17 September 2020 | US | 2022/0180597 | A1 | |
| | | | | entire text, all drawings | | | |
| | | | | JP | 2020-149174 | A | |
| US | 2009/0251748 | A1 | 08 October 2009 | EP | 2109304 | A1 | |
| | | | | entire text, all drawings | | | |
| US | 2016/0063951 | A1 | 03 March 2016 | WO | 2016/033099 | A1 | |
| | | | | entire text, all drawings | | | |
| CN | 113282175 | A | 20 August 2021 | (Family: none) | | | |
| CN | 115439300 | A | 06 December 2022 | (Family: none) | | | |
| JP | 2013-250621 | A | 12 December 2013 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006276692 A

- JP 2010169868 A